# EUROPÄISCHE PATENTSCHRIFT

(11) **EP 1 240 967 B1**
(45) Veröffentlichungstag und Bekanntmachung des Hinweises auf die Patenterteilung: **12.12.2007**
(21) Anmeldenummer: 02005463.1
(22) Anmeldetag: 09.03.2002
(51) Int. Cl.: B23F 23/12, B23F 21/22

(54) **Werkzeughalter für ringförmige Stabmesserköpfe und Stabmesserkopf**
Toolholder for circular spiral bevel gear cutting tool and the cutting tool
Port-outil pour des fraises à tailler annulaire les roues coniques à denture helicoidale et fraise à tailler

(30) Priorität: 14.03.2001 DE 10112729
(43) Veröffentlichungstag der Anmeldung: 18.09.2002
(73) Patentinhaber: Richardt Rainer, 99817 Eisenach (DE)
(72) Erfinder: Richardt Rainer, 99817 Eisenach (DE)
(74) Vertreter: Grünecker, Kinkeldey, Stockmair & Schwanhäusser Anwaltssozietät

(56) Entgegenhaltungen:
- WO-A-99/41035
- GB-A- 649 538
- GB-A- 972 365
- US-A- 3 571 876

## Beschreibung

Die Erfindung betrifft einen Werkzeughalter für Stabmesserköpfe mit axialer Führungsbohrung und mit den Stabmesserkopf überwiegend in Achsrichtung durchgreifenden Stabmessern bestehend aus an der Frässpindel befindlichen Führungs- und Kupplungselementen, nämlich einemdie axiale Führungsbohrung des Stabmesserkopfes spielfrei führenden Schaft, einer dem Stabmesserkopf zugewandte und diesen axial stützende Stirnfläche, einem Mitnehmer zur Übertragung des Antriebsmomentes der Frässpindel auf den Stabmesserkopf und einem den Stabmesserkopf axial gegen die Stirnfläche pressenden zentralen Spannkopf.

Es ist allgemein üblich die Frässpindel zum Zweck der Befestigung von Werkzeugen, u. a. von Stabmesserköpfen, mit Mitteln zur radialen Führung, zur axialen Positionierung und zum axialen Verspannen gegen die Frässpindel auszustatten. Zur Übertragung des Drehmomentes sind regelmäßig Mitnehmer oder Passfedern vorgesehen, die in entsprechende Ausnehmungen oder Nuten des Werkzeuges eingreifen und das Drehmoment der Frässpindel auf das Werkzeug übertragen. Diese Form der Verspannung der Werkzeuge hat sich bewährt.

Für die Verwendung dieser Befestigungsart an Stabmesserköpfen, bei denen die Schäfte der Stabmesser auf der Rückseite des Werkzeuges in unregelmäßigen Abständen hervorstehen, ist es notwendig den Stabmesserkopf asymmetrisch auszubilden, damit Raum für die Bewegung dieser Stabmesserschäfte zur Verfügung steht (Vgl. dazu WO 99/41035).

Diese Anpassung an die örtlichen Begebenheiten einer Frässpindel macht es notwendig, in Abhängigkeit von der Drehrichtung des Stabmesserkopfes unterschiedliche Stabmesserköpfe mit in unterschiedlichen Winkeln ausgerichteten Durchbrüchen für die Stabmesser einzusetzen.

Durch diesen Umstand müssen unterschiedliche Messerköpfe mit ähnlichem Grundaufbau bereit gestellt werden. Das ist kostenaufwändig bei der Beschaffung der Stabmesserköpfe, bei der Wartung und bei der Benutzung derselben.

Als weiterer Nachteil wäre festzuhalten, dass die rückseitig hervorstehenden Stabmesserschäfte zum einen eine Unfallgefahr darstellen und zum anderen Räume zum Festsetzen von Spänen oder Schmutzpartikeln bereithalten. Dadurch erhöht sich der Reinigungsaufwand vor allem beim Wechseln oder Nachstellen der Messer.

Die Druckschrift GB 649,538 beschreibt einen in axialer Richtung rotationssymmetrischen, scheibenförmigen Messerkopf, bei welchem sich in Achsrichtung des Messerkopfes erstreckende Stabmesser am Scheibenumfang in Nuten angeordnet sind. Der Messerkopf weist seitliche, unterschiedlich große Stirnflächen auf, die sich innerhalb eines von den Stabmessern umschlossenen Bereiches befinden und dazu dienen, den Messerkopf einerseits an einem rotierenden Werkzeughalter einer Verzahnungsmaschine zu befestigen und andererseits den Angriff eines zentralen Spannelementes zu ermöglichen. Der Stabmesserkopf besitzt hierfür bezüglich einer radial gerichteten Achse beiderseits der genannten Achse unterschiedlich große zentrale Führungsbohrungen.

Die Aufgabe der vorliegenden Erfindung ist es, einen geeigneten Werkzeughalter und einen Stabmesserkopf vorzuschlagen, der es ermöglicht, das Wechseln der Stabmesserköpfe generell zu erleichtern und mit einem einzigen Stabmesserkopf beide Arbeits- bzw. Drehrichtungen für das Fräsen zu ermöglichen. Das Montieren eines Stabmesserkopfes soll mit einfachen Mitteln und in kurzer Zeit möglich sein.

Diese Aufgabe wird durch die in Anspruch 1 definierten Merkmale auf einfache Weise gewährleistet. Der Werkzeughalter wird dabei so ausgebildet, dass er bis in einen Bereich ragt, wo dann die Verwendung eines symmetrisch ausgebildeten Stabmesserkopfes möglicht wird.

Der an der Frässpindel befestigte Schaft untergreift die hervorstehenden Schäfte der Stabmesser. Eine außen liegende Stirnfläche stützt das Werkzeug auch dann in axialer Richtung zuverlässig, wenn der Radius, auf dem die Stabmesser angeordnet sind, relativ klein gewählt ist.

Die Modifizierung der Erfindung nach Anspruch 2 erlaubt es durch den Einsatz eines Adapters herkömmliche universell einsetzbare Frässpindeln zu verwenden und das Führen und Antreiben des Messerkopfes in einem axialen Bereich zu realisieren, wo eine symmetrische Ausbildung des - Stabmesserkopfes gewährleistet werden kann.

Die Führungs- und Kupplungselemente, die bei Verwendung eines Adapters zur Anwendung kommen, entsprechen prinzipiell denen, die bei der unmittelbaren Kupplung von Werkzeug und Frässpindel bewährt sind. Der Anspruch 3 definiert insoweit den so geschaffenen und durch den Adapter ergänzten Werkzeughalter.

Der unabhängige Anspruch 4 definiert eine weitere grundsätzliche Lösung für die eingangs gestellte Aufgabe. Bei dieser Ausführung wird die axiale und radiale Führung des Stabmesserkopfes durch Führungs- und Kupplungselemente realisiert, die sämtlich die Schaftenden der Stabmesser untergreifen. Für die Abschirmung der Schaftenden von außen ist ein gesonderter Schutzring vorgesehen, der an der Frässpindel befestigt ist.

Der unabhängige Anspruch 5 definiert den erstmals verwendbaren Stabmesserkopf, der aus einem ringförmigen Grundkörper besteht, und dessen Querschnitt zu einer radialen Achse symmetrisch ausgebildet werden kann.

Die maßliche Modifizierung des Messerkopfes nach Anspruch 6 sichert einerseits eine optimale Spannung der Stabmesser und gewährleistet zudem unabhängig vom vorgesehenen Einsatz (Rechtshandbetrieb oder Linkshandbetrieb) eine zuverlässige Verbindung mit den Kupplungs- und Führungselementen zur Frässpindel und/oder zum Adapter.

Die Ausbildung des Stabmesserkopfes nach Anspruch 7 ermöglicht auch die Verwendung von Stabmesserköpfen sowohl mit sehr großen als auch mit sehr kleinen Durchmessern der Stabmasserkreise.
Bei sehr großen Durchmessern des Stabmesserkreises wird der Stabmesserkopf axial sehr weit außen geführt. Das erhöht die Präzision seiner Arbeitsweise, vor allem bei großen Schnittkräften. Andererseits können bei dieser Ausführung die Stabmesser auf sehr kleinen Radien angeordnet werden. Das axiale Abstützen des Werkzeuges erfordert innerhalb der Stabmesser keine besonderen Mittel.

Die Anordnung der Mitnehmer im Bereich der äußeren Stirnflächen des Stabmesserkopfes - nach Anspruch 8 - führt zu einer geringeren Belastung derselben oder zur Vergrößerung des zu übertragenden Drehmomentes.

Die Ausbildung des Stabmesserkopfes nach Anspruch 9 gestattet ein einfaches Lösen desselben vom Adapter bzw. von der Frässpindel. Die Verwendung der Abdeckscheibe nach Anspruch 10 ermöglicht einen schonenden und gefahrlosen Transport der vorbereiteten Messerköpfe.

Die Erfindung soll nachstehend an einem Ausführungsbeispiel näher erläutert werden. In den dazugehörigen Zeichnungen zeigen:
- Fig. 1: einen Längsschnitt durch einen Messerkopf, der auf einem Adapter gehalten und an der Frässpindel montiert ist,
- Fig. 2: eine vereinfachte Darstellung des Stabmesserkopfes in einer Ansicht von links - bezogen auf Fig. 1 - zur Demonstration der Anordnung der Stabmesser,
- Fig. 3: einen Querschnitt durch einen Adapter,
- Fig. 4: eine Ansicht von links auf den Adapter der Fig. 3,
- Fig. 5: eine Darstellung des Werkzeughalters und des Messerkopfes an einer modifizierten Frässpindel mit außen liegender Stützfläche für den Stabmesserkopf und
- Fig. 6: eine Darstellung analog zu Fig. 5 mit innen liegender axialer Stützfläche für den Stabmesserkopf.

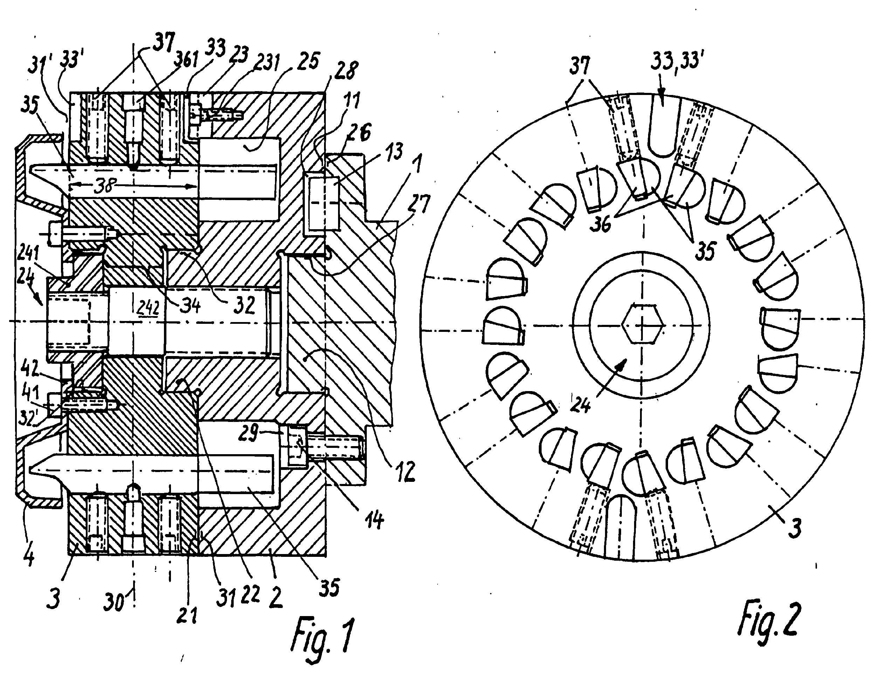

Die Fig. 1 beschreibt eine bevorzugte Ausführung des Werkzeughalters unter Verwendung einer üblichen Frässpindel 1. Diese Frässpindel 1 besitzt für die radiale Führung des Adapters 2 einen axial vorstehenden Schaft 12, für die axiale Führung eine Stirnfläche 11 und für die Übertragung des Drehmomentes einen Mitnehmer 13, der mittels Schraubverbindung in einem Bund der Frässpindel 1 gehalten ist.

Auf diese Kupplungs- und Führungselemente wird in üblicher Weise der Adapter 2 axial aufgesetzt. Dieser Adapter 2 hat zu diesem Zweck eine Führungsbohrung 27, eine Stirnfläche 26 und eine Ausnehmung 28 für den Mitnehmer 13. Zur Sicherung dieser führenden und kuppelnden Verbindung zwischen Adapter 2 und Frässpindel 1 sind mehrere Spannschrauben 14 vorgesehen, die entsprechende Bohrungen 29 im Adapter 2 durchgreifen.

Der Adapter 2 besitzt auf der Seite, die dem Stabmesserkopf 3 zugewandt ist, Kupplungs- und Führungselemente, die bis in den axialen Spannbereich 38 des Stabmesserkopfes 3 reichen, in denen sich die Führungs- und Spannelemente (Spannkeile 36) für die Stabmesser 35 befinden. Die Spannelemente für die Stabmesser 35 bestehen im vorliegenden Fall aus Spannkeilen 36, die die halbkreisförmigen Schäfte der Stabmesser 35 in entsprechenden Ausnehmungen des Stabmesserkopfes führen und klemmen. Die Lage der Spannkeile 36 im Spannbereich 38 wird in Achsrichtung durch die Fixierschrauben 361 gesichert. Die Spannwirkung der Spannkeile 36 bringen die Spannschrauben 37 auf.

Der Schaft 22 des Adapters 2 reicht in eine Führungsbohrung 32 des Stabmesserkopfes 3. Diese Führungsbohrung 32 befindet sich im axialen Spannbereich 38 der Stabmesser 35. Der Schaft 22 kann leicht konisch ausgebildet sein, so dass die Verbindung zwischen Adapter 2 und Stabmesserkopf 3 in radialer Richtung spielfrei gewährleistet werden kann. Der Adapter 2 hat zudem eine Stirnfläche 21, an der sich die anliegende Stirnfläche 31, 31' des Stabmesserkopfes 3 sicher anlegen kann.

Ein Teil dieser Stirnfläche 21 befindet sich innerhalb der Bahn der Stabmesser 35. Ein anderer Teil ist außerhalb der Bahn der Stabmesser 35 angeordnet. Zwischen diesen beiden Teilen der Stirnfläche 21 befindet sich ein Ringraum 25, in den die rückwärtigen Enden der Stabmesser ragen.

Als Mittel zur Übertragung des Drehmomentes ist im äußeren Teil der Stirnfläche 21 eine Nut 232 eingearbeitet. In dieser Nut 232 wird ein Mitnehmer 23 mittels Schraube 231 gehalten. Dieser Mitnehmer 23 greift in eine entsprechende Ausnehmung (Nut 33) am Stabmesserkopf 3 nahezu spielfrei ein.

Der Stabmesserkopf 3 ist symmetrisch. Er besitzt auf beiden Seiten der radialen Achse 30 Führungsbohrungen 32, 32', die im mittleren Bereich - durch den Bund 34 voneinander getrennt werden. Die jeweils außen liegende Begrenzungsfläche des Bundes dient dem Angriff des Spannkopfes 24.

Der Stabmesserkopf 3 besitzt beiderseits der Achse 30 symmetrisch zueinander angeordnete Führungs- und Kupplungselemente, so dass der Stabmesserkopf 30 zum Zweck der Änderung seiner Arbeitsrichtung, nach der Lösung vom Adapter 2, nur um die radiale Achse 30 um 180° geschwenkt werden muss. Durch diese Schwenkung verändert sich die Neigungsrichtung der Spannfläche der Stabmesser 35, so dass vom sog. Rechtshandbetrieb auf Linkshandbetrieb übergegangen werden kann, ohne einen anders gestalteten Stabmesserkopf 3 zu verwenden.

Für die Befestigung des Stabmesserkopfes 3 am Adapter 2 ist dort zunächst ein Zapfen 242 angebracht, der in eine zentrale Gewindebohrung des Adapters 2 greift und darin zuverlässig und präzise fixiert wird. In einem mittleren Lagerabschnitt erhält der Stabmesserkopf 3 durch den Zapfen 242 eine zusätzliche radiale Führung, die vor allem die Montage des Messerkopfes erleichtern soll. Ein äußerer Gewindeabschnitt am Zapfen 242 nimmt die Spannmutter 241 auf.

Die Spannmutter 241 hat einen axial vorstehenden Abschnitt mit entsprechenden Schlüsselflächen und einen radial nach außen gerichteten Bund mit größerem Durchmesser, der in der jeweils äußeren Führungsbohrung 32 des Stabmesserkopfes 3 Platz findet.

Durch das Lösen dieser Spannmutter 241 wird es möglich den Stabmesserkopf 3 unabhängig vom Adapter 2 zu entfernen. Zur Überwindung der dabei auftretenden Haftkräfte ist eine Abdeckscheibe 4 an der äußeren Stirnfläche 31' des Stabmesserkopfes 3 befestigt. Diese Abdeckscheibe 4 hat innen mindestens einen Vorsprung 42, der den Bund der Spannmutter 241 übergreift. Weil diese Abdeckscheibe 4 mittels Befestigungsschrauben 41 am Stabmesserkopf 3 stabil befestigt ist, können mittels der Spannschraube 241 sehr große, abhebende Zugkräfte auf den Stabmesserkopf 3 ausgeübt werden. Die Abdeckscheibe 4 kann zusätzlich mit einem Profil ausgestattet sein, das die scharfkantigen Köpfe der Stabmesser 35 übergreift. Während des Transportes und der Lagerung sind diese dann zuverlässig geschützt. Vor der Demontage des Stabmesserkopfes 3 von dem Adapter 2 wird die Abdeckscheibe 4 in einem ersten Arbeitsgang mittels der Befestigungsschrauben 41 angebracht.

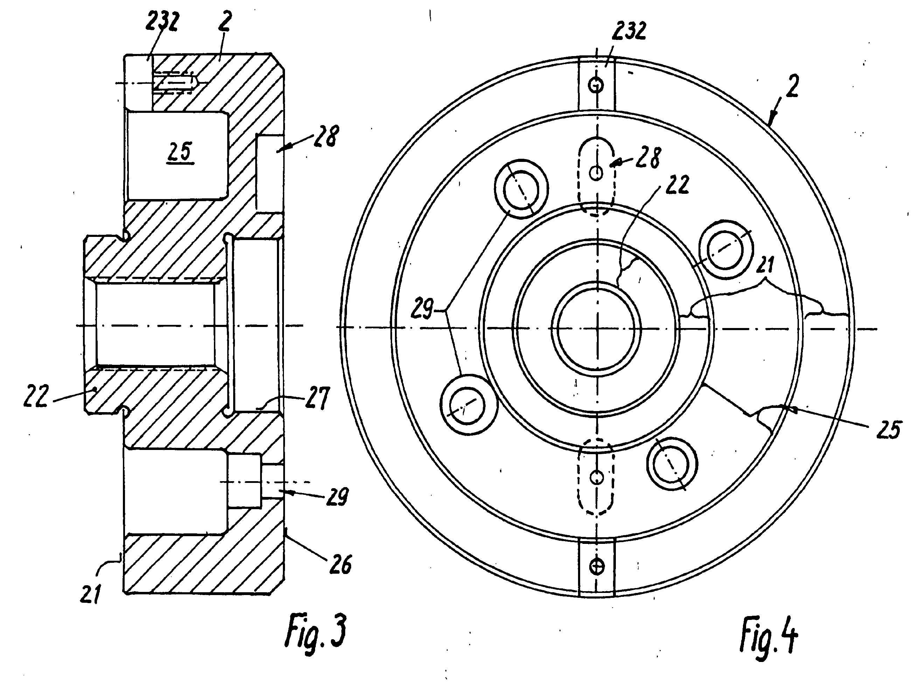

Die Fig. 3 und 4 zeigen nochmals den Adapter 2 als Einzelteil. Diese Darstellung macht die Führungs- und Kupplungselemente zur Frässpindel 1 einerseits und die Führungs- und Kupplungselemente zum Stabmesserkopf 3 deutlich, die in Bezug auf Fig 1 bereits beschrieben wurden.

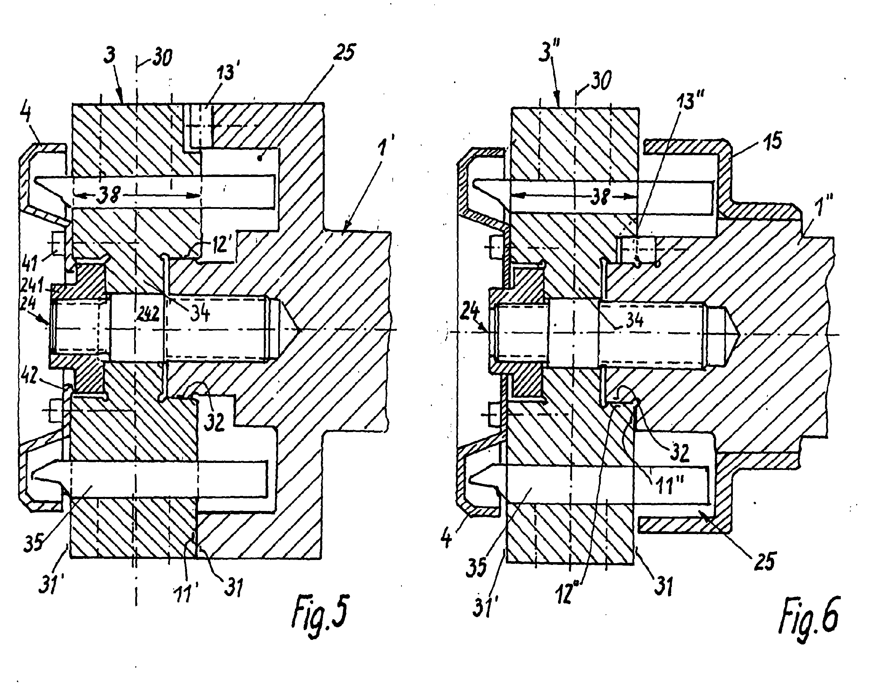

In Fig. 5 ist ein Werkzeughalter dargestellt, bei dem die Kupplungs- und Führungselemente der Frässpindel 1' so ausgebildet sind, dass sie die Aufgaben des Adapters 2, der in Bezug auf Fig. 1 beschrieben wurde, mit übernehmen können. Das heißt, der Schaft 12' der Frässpindel 1' reicht bis in den axial definierten Spannbereich 38 der Stabmesser 35. Die Stirnfläche 11' zur axialen Fixierung eines symmetrisch ausgebildeten Stabmesserkopfes 3 übergreift den Bereich der Stabmesser und reicht bis in den Bereich der Stirnflächen 31, 31' eines symmetrisch ausgebildeten Stabmesserkopfes 3. Der Spannkopf 24 wird auf die gleiche Weise wirksam wie es in Bezug auf die Fig. 1 beschrieben wurde.

Der Zapfen 242 wird jedoch in diesem Fall direkt in eine entsprechende Gewindebohrung der Frässpindel 1' eingeschraubt.

Die Fig. 6 beschreibt eine ähnliche Ausführung wie Fig. 5. Auch in diesem Fall übernimmt die Frässpindel 1" die Funktion des Adapters 2. Die Kupplungs- und Führungselemente für den Stabmesserkopf 3 sind hier sämtlich innerhalb der Bahn der Stabmesser 35 angeordnet.

Der Schaft 12° der Frässpindel 1" ragt in Achsrichtung bis in den Spannbereich 38 der Stabmesser 35. Die axiale Stützung des Stabmesserkopfes 3 erfolgt hier allein durch die Stirnfläche 11 " der Frässpindel 1".

Der Mitnehmer 13" ist im Bereich dieser Stirnfläche 11" angeordnet und greift in entsprechende Nuten oder Ausnehmungen am symmetrisch ausgebildeten Stabmesserkopf 3".

Zur Abdeckung des Bereiches der Stabmesserenden und zur Ausbildung des Ringraumes 25 ist in diesem Fall ein Schutzring 15 an der Frässpindel 1" befestigt. Der Schutzring 15 übergreift im freien Abstand die Endabschnitte der Stabmesser 35 und vermeidet so Unfallgefahren und reduziert die Verschmutzung. Der Schutzring 15 hat hier keine Führungs- oder Kupplungsfunktion.

### Bezugszeichenliste

- 1, 1', 1": Frässpindel
- 11, 11', 11: Stirnfläche
- 12, 12', 12": Schaft Führungs- und Kupplungselemente
- 13, 13', 13": Mitnehmer
- 14: Spannschrauben
- 15: Schutzring
- 2: Adapter
- 21: Stirnfläche
- 22: Schaft Führungs- und Kupplungselemente
- 23: Mitnehmer
- 231: Schraube
- 232: Nut
- 24: Spannkopf
- 241: Spannmutter
- 25: Ringraum Führungs- und Kupplungselemente
- 26: Stirnfläche
- 27: Führungsbohrung
- 28: Nut (für Mitnehmer)
- 29: Bohrung
- 3, 3': Stabmesserkopf
- 30: Achse (radial)
- 31, 31': Stützfläche
- 32, 32': Führungsbohrung Führungs- und Kupplungselemente
- 33, 33': Nut (für Mitnehmer)
- 34: Bund
- 341: zweite Stützfläche
- 35: Stabmesser
- 36.: Spannkeil
- 361: Fixierschraube
- 37: Spannschrauben
- 38: Spannbereich
- 4: Abdeckscheibe
- 41: Befestigungsschraube
- 42: Vorsprung

## Patentansprüche

1. Werkzeughalter für Stabmesserköpfe mit axialer Führungsbohrung und mit den Stabmesserkopf überwiegend in Achsrichtung durchgreifenden Stabmessern bestehend aus an der Frässpindel befindlichen Frührungs- und Kupplungselementen, nämlich
einem die axiale Führungsbohrung (32) des Stabmesserkopfes (3) spielfrei führenden Schaft (12),
einer dem Stabmesserkopf (3) zugewandte und diesen axial stützende Stirnfläche (11),
einem Mitnehmer (13) zur Übertragung des Antriebsmomentes der Frässpindel (1) auf den Stabmesserkopf (3), und
einem den Stabmesserkopf (3) axial gegen die Stirnfläche (11) pressenden zentralen Spannkopf (24;14),
**dadurch gekennzeichnet,**
**dass** mindestens ein radial äußerer Teil der Stirnfläche (11, 11', 11", 21) außerhalb des Bereiches der Stabmesser (35) angeordnet ist und
**dass** zwischen dem äußeren Teil der Stirnfläche (11, 11', 11", 21) und dem in die Führungsbohrung (32) des Stabmesserkopfes (3) ragenden Schaft (12, 12', 12", 22) ein zum Messerkopf hin offener sich axial hinter die Stirnfläche (11, 11', 11", 21) erstreckender Ringraum (25) für das freie Umschließen der rückseitigen Enden der Stabmesser (35) vorgesehen ist.

2. Werkzeughalter nach Anspruch 1, **dadurch gekennzeichnet,**
**dass** zwischen den Führungs- und Kupplungselementen (11, 12, 13 ...) der Frässpindel (1) und dem Stabmesserkopf (3) ein Adapter (2) eingefügt ist,
**dass** der Adapter (2) an der der Frässpindel (1) zugewandten Seite passende Führungs- und Kupplungselemente (21, 22, 23) zur Verbindung mit der Frässpindel (1) und separate Befestigungselemente (24) aufweist und
**dass** der Adapter (2) an der dem Stabmesserkopf (3) zugewandten Seite mit Führungs-und Kupplungselementen (26, 27, 28) für diesen Stabmesserkopf (3) ausgestattet ist und
**dass** der außen angeordnete Teil der den Stabmesserkopf (3) axial stützenden Stirnfläche (21) und der Ringraum (25) für das freie Umschließen der rückseitigen Enden der Stabmesser (35) am Adapter (2) vorgesehen sind.

3. Werkzeughalter nach Anspruch 1 und 2, **dadurch gekennzeichnet,**
**dass** der Adapter (2) an der der Frässpindel (1) zugewandten Seite mit einer axialen Führungsbohrung (27), mit einer axialen Stützfläche (26) sowie einem Mitnehmer (Nut 28) ausgestattet und mittels Schraubverbindung (Spannschraube 14) an der Frässpindel (1) lösbar befestigt ist und
**dass der Adapter (2) zum** Zusammenwirken mit **dem** Stabmesserkopf (3) Kupplungselemente, bestehend aus einem Schaft (22), aus einer axialen Stützfläche (21) außerhalb der Stabmesser (35), aus einem Mitnehmer (23) im Bereich der Stützfläche (21) außerhalb der Stabmesser und aus einem Spannkopf (24) mit zentralen Gewindespannmitteln (Muttern 241) aufweist.

4. Werkzeughalter für Stabmesserköpfe mit axialer Führungsbohrung und mit den Stabmesserkopf überwiegend in Achsrichtung durchgreifenden Stabmessern bestehend aus an der Frässpindel befindlichen Führungs- und Kupplungselementen, nämlich
einem die axiale Führungsbohrung (32) des Stabmesserkopfes (3) spielfrei führenden Schaft (12),
einer dem Stabmesserkopf (3) zugewandte und diesen axial stützende Stimfläche (11),
einem Mitnehmer (13") zur Übertragung des Antriebsmomentes der Frässpindel (1) auf den Stabmesserkopf (3), und
einem den Stabmesserkopf axial gegen die Stirnfläche (11) pressenden zentralen Spannkopf (24),
**dadurch gekennzeichnet**
**dass** an dem Abschnitt der Frässpindel (1), an dem die axial stützende, ringförmige Stützfläche (11") angeordnet ist, mindestens ein Schutzring (15) befestigt ist, der die hervorstehenden Enden der Stabmesser im Abstand umgreift.

5. Stabmesserkopf bestehend aus einem Messerträger mit im wesentlichen kreisförmig angeordneten, denselben axial durchgreifenden und darin fixierten Stabmessem (35)
mit einer zentralen Führungsbohrung (32) zur radialen Führung,
mit einer ersten Stimfäche (31) zum direkten oder indirekten axialen Abstützen gegen die Frässpindel und
mit einer zweiten Stirnfläche (341) für den Angriff eines zentralen Spannelementes (24),
**dadurch gekennzeichnet,**
**dass** der Ringquerschnitt des Messerträgers zu einer radial gerichteten Achse (30) symmetrisch ausgebildet ist,
**dass** beiderseits der genannten Achse (30) zentrale Führungsbohrungen (32, 32') vorgesehen sind, die mittig durch einen nach innen gerichteten Bund (34) begrenzt sind, und
**dass** die zweite Stirnfläche (341) für den Angriff des zentralen Spannelementes (24) durch eine seitliche Begrenzungsfläche des Bundes (34) gebildet wird.

6. Stabmesserkopf nach Anspruch 5, **dadurch gekennzeichnet,**
**dass** die Breite des symmetrischen Stabmesserkopfes zwischen 20 mm und 60 mm gewählt ist.

7. Stabmesserkopf nach Anspruch 5, **dadurch gekennzeichnet,**
**dass** die ersten Stirnflächen (31, 31') zum axialen Abstützen des Stabmesserkopfes (3) an der Frässpindel (1) oder dem Adapter (2) außerhalb der Stabmesser (35) angeordnet sind.

8. Stabmesserkopf nach Anspruch 5 und 7, **dadurch gekennzeichnet,**
**dass** im Bereich der ersten Stirnflächen (31, 31') zum axialen Abstützen des Stabmesserkopfes (3) an der Frässpindel (1) oder dem Adapter (2) Ausnehmungen (33, 33') oder Vorsprünge für die Mitnehmer (13,23) zur Übernahme der Drehmomentes vorgesehen sind.

9. Stabmesserkopf nach Anspruch 5, **dadurch gekennzeichnet,**
**dass** dem Spannkopf (24) des Werkzeughalters, der einen äußeren Bund aufweist, die zweite Stirnfläche (341) des Stabmesserkopfes (3) zugeordnet ist,
**dass** auf der jeweils außen liegenden Stirnseite (31, 31') des Stabmesserträgers (3) Vorsprünge (42) lösbar befestigt sind, die den Bund des Spannkopfes (24) außen übergreifen.

10. Stabmesserkopf nach Anspruch 9, **dadurch gekennzeichnet,**
**dass** die Vorsprünge (42) an einem Ring (Abdeckscheibe 4) ausgebildet sind, an dem auch Profile, die zum Abdecken der Köpfe der Stabmesser (35) während der Transportes oder der Lagerung der Stabmesserköpfe (3) dienen, befestigt sind.

## Claims

1. Tool holder for bar blade heads with an axial guide bore and with bar blades penetrating the bar blade head substantially in the axial direction, consisting of guide and coupling elements located on the milling spindle, namely
a shaft (12) guiding the axial guide bore (32) of the bar blade head (3) without play,
a front face (11) facing the bar blade head (3) and axially supporting said bar blade head,
a drive element (13) for transmitting the driving torque of the milling spindle (1) to the bar blade head (3), and
a central clamping head (24; 14) axially pressing the bar blade head (3) against the front face (11),
**characterised**
**in that** at least one radial outer part of the front face (11, 11', 11", 21) is arranged outside the region of the bar blade (35) and
**in that** between the outer part of the front face (11, 11', 11", 21) and the shaft (12, 12', 12", 22) projecting into the guide bore (32) of the bar blade head (3) an annular space (25), open towards the blade head and axially extending behind the front face (11, 11', 11", 21), is provided for freely enclosing the rear ends of the bar blades (35).

2. Tool holder according to Claim 1, **characterised**
**in that** an adaptor (2) is inserted between the guide and coupling elements (11, 12, 13, etc) of the milling spindle (1) and the bar blade head (3),
**in that** the adaptor (2) on the side facing the milling spindle (1) has suitable guide and coupling elements (21, 22, 23) for connecting to the milling spindle (1) and separate fixing elements (24) and
**in that** the adaptor (2) on the side facing the bar blade head (3) is provided with guide and coupling elements (26, 27, 28) for said bar blade head (3) and
**in that** the externally arranged part of the front face (21) axially supporting the bar blade head (3) and the annular space (25) are provided for freely enclosing the rear ends of the bar blades (35) on the adaptor (2).

3. Tool holder according to Claims 1 and 2, **characterised**
**in that** the adaptor (2) on the side facing the milling spindle (1) is provided with an axial guide bore (27), with an axial support surface (26) as well as a drive element (groove 28) and is releasably fixed to the milling spindle (1) by means of a screw connection (clamping screw 14) and in that the adaptor (2) for cooperating with the bar blade head (3) consists of coupling elements, consisting of a shaft (22), an axial support surface (21) outside the bar blades (35), a drive element (23) in the region of the support surface (21) outside the bar blades and a clamping head (24) with central threaded clamping means (nuts 241).

4. Tool holder for bar blade heads with an axial guide bore and with bar blades penetrating the bar blade head substantially in the axial direction, consisting of guide and coupling elements located on the milling spindle, namely a shaft (12) guiding the axial guide bore (32) of the bar blade head (3) without play,
a front face (11) facing the bar blade head (3) and axially supporting said bar blade head,
a drive element (13") for transmitting the driving torque of the milling spindle (1) to the bar blade head (3) and
a central clamping head (24) axially pressing the bar blade head against the front face (11),
**characterised**
**in that** at least one protective ring (15) is fixed to the portion of the milling spindle (1) on which the axially supporting annular support surface (11") is arranged, and which engages around the projecting ends of the bar blades at a distance.

5. Bar blade head consisting of a blade carrier with bar blades (35) arranged in a substantially circular manner, axially penetrating said blade carrier and fixed therein, having a central guide bore (32) for radial guidance, having a first front face (31) for direct or indirect axial support against the milling spindle and
having a second front face (341) for the action of a central clamping element (24),
**characterised**
**in that** the annular cross-section of the blade carrier is formed symmetrically to a radially oriented axis (30),
**in that** on both sides of the aforementioned axis (30) central guide bores (32, 32') are provided which are centrally delimited by an inwardly oriented collar (34), and
**in that**, for the action of the central clamping
element (24), the second front face (341) is formed by a lateral periphery of the collar (34).

6. Bar blade head according to Claim 5, **characterised**
**in that** the width of the symmetrical bar blade head is selected to be between 20 mm and 60 mm.

7. Bar blade head according to Claim 5, **characterised**
**in that** the first front faces (31, 31') are arranged for the axial support of the bar blade head (3) on the milling spindle (1) or the adaptor (2) outside the bar blades (35).

8. Bar blade head according to Claims 5 and 7,
**characterised**
**in that** in the region of the first front faces (31, 31'), recesses (33, 33') or projections for the drive
elements (13, 23) are provided for the axial support of the bar blade head (3) on the milling spindle (1) or on the adaptor (2), for transmitting the torque.

9. Bar blade head according to Claim 5, **characterised**
**in that** the second front face (341) of the bar blade head (3) is associated with the clamping head (24) of the tool holder which has an external collar, in that on the respective externally located front face (31, 31') of the bar blade carrier (3) projections (42) are releasably fixed, which externally engage over the collar of the clamping head (24).

10. Bar blade head according to Claim 9, **characterised**
**in that** the projections (42) are formed on a ring (cover disc 4), on which profiles are also fixed which serve to cover the heads of the bar blades (35) during the transport or storage of the bar blade heads (3).

## Revendications

1. Porte-outil pour fraises à plaquettes rapportées, comportant un perçage de guidage axial et des plaquettes qui traversent la fraise globalement dans le sens axial, et composé d'éléments de guidage et d'accouplement situés sur la broche de fraise, à savoir
une tige (12) qui guide sans jeu le perçage de guidage axial (32) de la fraise à plaquettes rapportées (3),
une surface frontale (11) qui est tournée vers la fraise (3) et qui supporte celle-ci axialement,
un organe d'entraînement (13) pour transmettre le couple d'entraînement de la broche de fraise (1) à la fraise (3), et
une tête de serrage centrale (24 ; 14) qui presse la fraise (3) axialement contre la surface frontale (11),
**caractérisé en ce qu'**au moins une partie radialement extérieure de la surface frontale (11, 11', 11", 21) est disposée à l'extérieur de la zone des plaquettes (35), et
**en ce qu'**il est prévu, entre la partie extérieure de la surface frontale (11, 11', 11", 21) et la tige (12, 12', 12", 22) qui entre dans le perçage de guidage (32) de la fraise à plaquettes rapportées (3), un espace annulaire (25) qui est ouvert en direction de la fraise, qui s'étend axialement derrière la surface frontale (11, 11', 11", 21) et qui est destiné à entourer librement les extrémités arrière des plaquettes (35).

2. Porte-outil selon la revendication 1,
**caractérisé en ce qu'**un adaptateur (2) est placé entre les éléments de guidage et d'accouplement (11, 12, 13...) de la broche de fraise (1) et la fraise à plaquettes rapportées (3),
**en ce que** l'adaptateur (2) comporte sur le côté tourné vers la broche de fraise (1) des éléments de guidage et d'accouplement adaptés (21, 22, 23) pour la liaison avec ladite broche de fraise (1), et des éléments de fixation séparés (24),
**en ce que** l'adaptateur (2) est équipé, sur le côté tourné vers la fraise (3), d'éléments de guidage et d'accouplement (26, 27, 28) pour la fraise (3),
et **en ce que** la partie, située à l'extérieur, de la surface frontale (21) qui supporte axialement la fraise (3) et l'espace annulaire (25) destiné à entourer librement les extrémités arrière des plaquettes (35) sont disposés sur l'adaptateur (2).

3. Porte-outil selon les revendications 1 et 2,
**caractérisé en ce que** l'adaptateur (2), sur le côté tourné vers la broche de fraise (1), est pourvu d'un perçage de guidage axial (27), d'une surface d'appui axiale (26) et d'un organe d'entraînement (écrou 28), et est fixé de manière amovible à la broche (1) par vissage (vis de serrage 14), et
**en ce que** l'adaptateur (2), pour coopérer avec la fraise (3), comporte des éléments d'accouplement qui se composent d'une tige (22), d'une surface axiale (21) située à l'extérieur des plaquettes (35), d'un organe d'entraînement (23) situé dans la zone de la surface d'appui (21), à l'extérieur des plaquettes, et d'une tête de serrage (24) pourvue de moyens de serrage filetés centraux (écrous 241).

4. Porte-outil pour fraises à plaquettes rapportées, comportant un perçage de guidage axial et des plaquettes qui traversent la fraise globalement dans le sens axial, et composé d'éléments de guidage et d'accouplement situés sur la broche de fraise, à savoir
une tige (12) qui guide sans jeu le perçage de guidage axial (32) de la fraise à plaquettes rapportées (3),
une surface frontale (11) qui est tournée vers la fraise (3) et qui supporte celle-ci axialement,
un organe d'entraînement (13") pour transmettre le couple d'entraînement de la broche de fraise (1) à la fraise (3), et
une tête de serrage centrale (24 ; 14) qui presse la fraise (3) axialement contre la surface frontale (11),
**caractérisé en ce qu'**il est prévu, fixée sur la section de la broche de fraise (1) sur laquelle est disposée la surface d'appui annulaire (11") supportant axialement la broche (1), au moins une bague de protection (15) qui entoure à une certaine distance les extrémités saillantes des plaquettes.

5. Fraise à plaquettes rapportées composée d'un support de plaquettes avec des plaquettes (35) qui sont disposées sensiblement en cercle, qui traversent axialement le support et qui sont fixées dans celui-ci, comportant
un perçage de guidage central (32) pour le guidage radial,
une première surface frontale (31) pour l'appui axial direct ou indirect contre la broche de fraise, et
une seconde surface frontale (341) pour l'action d'un élément de serrage central (24),
**caractérisée en ce que** la section transversale annulaire du support de plaquettes est symétrique par rapport à un axe (30) dirigé radialement,
**en ce qu'**il est prévu des deux côtés de l'axe (30) des perçages de guidage centraux (32, 32') qui sont délimités au milieu par une collerette (34) dirigée vers l'intérieur, et
**en ce que** la seconde surface frontale (341) prévue pour l'action de l'élément de serrage central (24) est définie par une surface de délimitation latérale de la collerette (34).

6. Fraise à plaquettes rapportées selon la revendication 5, **caractérisée en ce que** la largeur de ladite fraise symétrique est choisie entre 20 mm et 60 mm.

7. Fraise à plaquettes rapportées selon la revendication 5, **caractérisée en ce que** les premières surfaces frontales (31, 31') pour l'appui axial de la fraise (3) contre la broche de fraise (1) ou contre l'adaptateur (2) sont disposées à l'extérieur des plaquettes (35).

8. Fraise à plaquettes rapportées selon les revendications 5 et 7, **caractérisée en ce qu'**il est prévu, dans la zone des premières surfaces frontales (31, 31') pour l'appui axial de la fraise (3) contre la broche de fraise (1) ou contre l'adaptateur (2), des creux (33, 33') ou des saillies pour les organes d'entraînement (13, 23), en vue de recevoir le moment de rotation.

9. Fraise à plaquettes rapportées selon la revendication 5, **caractérisée en ce que** la seconde surface frontale (341) de la fraise (3) est associée à la tête de serrage (24) du porte-outil qui présente une collerette extérieure, et
**en ce qu'**il est prévu des saillies (42) qui sont fixées de manière amovible sur le côté frontal (31, 31'), situé à l'extérieur, du support de plaquettes (3) et qui empiètent sur l'extérieur de la collerette de la tête de serrage (24).

10. Fraise à plaquettes rapportées selon la revendication 9, **caractérisée en ce que** les saillies (42) sont formées sur une bague (plaque de recouvrement 4) sur laquelle sont également fixés des profils qui servent à couvrir la tête des plaquettes (35) pendant le transport ou le stockage des fraises (3).
